# EUROPEAN PATENT APPLICATION

(11) **EP 4 564 378 A1**
(43) Date of publication of application: **04.06.2025**
(21) Application number: 24178176.4
(22) Date of filing: 27.05.2024
(51) Int. Cl.: H01F 1/153, H01F 3/04, H01F 41/02, H02K 1/02, H02K 5/02, H02K 15/02, H01F 41/00

(54) **STATOR CORE OF NANOCRYSTALLINE MATERIAL AND PROCESS FOR MANUFACTURING A STATOR CORE OF NANOCRYSTALLINE MATERIAL**

(30) Priority: 30.11.2023 BR 102023025172
(71) Applicant: Weg Equipamentos Elétricos S/A, 89256-900 Jaraguá do Sul, SC (BR)
(72) Inventor: SCHMITZ, Daniel, 89256-430 JARAGUÁ DO SUL (BR); PERES DE OLIVEIRA, Edson Carlos, 89255-725 JARAGUÁ DO SUL (BR); LINDROTH DAUNER, Fernando Andre, 89255-442 JARAGUÁ DO SUL (BR); SOUZA AGUIAR, Rodrigo, 89254-180 JARAGUÁ DO SUL (BR); STOINSKI, Valmir Luis, 89255-740 JARAGUÁ DO SUL (BR)
(74) Representative: Plasseraud IP

(57) **Abstract**

The present invention is related to a stator core (1) of nanocrystalline material for an axial flux electric machine, which comprises an encapsulated nanocrystalline material, wherein the encapsulation comprises at least two distinct encapsulation materials deposited over the nanocrystalline material. The first encapsulation material comprises a material able to increase the mechanical rigidity of the stator core and the second encapsulation material comprises a material able to increase the thermal exchange capacity of the electric machine.

## Description

### FIELD OF THE INVENTION

The present invention is related to a stator core of nanocrystalline material and, more specifically, to a stator core of nanocrystalline material for an axial electromagnetic flux electric machine.

### BACKGROUND OF THE INVENTION

Axial electromagnetic flux electric machines are widely known in the art, and basically comprise at least one stator and at least one disc-shaped rotor wherein the electromagnetic flux travels in the axial direction of the machine's rotating axis.

The stator comprises, usually, a laminated magnetic core over which the coils of conductive material are wound.

The choice of materials for the electric machine directly impacts on the power, efficiency, and cost of the equipment. The same occurs with the choice of magnetic materials, wherein parameters such as magnetic permeability, saturation point, coercivity, magnetic losses, magnetorestriction and processing complexity are evaluated in the cost/benefit equation which governs the selection of components.

Particularly, the materials selected for manufacturing stators and rotors greatly impact the weight, volume, efficiency, thermal dissipation, and costs of an electric machine.

The use of ferromagnetic materials, such as nickel-iron, cobalt-iron or ferrosilicon alloys is common.

The search for higher efficiency and performance at a lower cost has led to the exploration of other magnetic materials, such as composite materials, amorphous and nanocrystalline.

Magnetic composites comprise particles of powder metal material, such as iron or iron alloy powder, surrounded by insulating organic material. Although they present the advantage of allowing the construction of components by compacting in different forms, said materials have lower metal resistance than the laminated metal alloys.

Amorphous magnetic materials result from rapid cooling of metal alloys. The atoms of said materials are arranged randomly, without periodicity or spatial order, which grants them easy magnetization. Although they present high mechanical resistance, they have low elasticity, being highly brittle.

The nanocrystalline materials result from amorphous materials, from the thermal treatment of crystallization of amorphous material (amorphous ribbons). Said materials present high magnetic flux density, high permeability, magnetic stability and low coercivity and magnetorestriction. However, they also present low elasticity, being brittle.

Another characteristic of the amorphous and nanocrystalline materials is the thin thickness thereof, which brings, jointly with the low elasticity, a complexity in the handling of material during manufacture of the magnetic component. In the case of manufacture of a stator core, for example, the thin thickness and low elasticity preclude the use of standard manufacturing processes.

A known solution for dealing with this problem is core encapsulation, which condition causes the external mechanical stresses to be sustained by the encapsulation material, ensuring the integrity of the core material.

Document CN105490400, for example, discloses a manufacturing method for nanocrystalline or amorphous material stator core for an axial flux motor, which comprises the steps of coiling an annular part using a nanocrystalline or amorphous alloy strip, the strip being coiled to form the annular part with predetermined inner diameter and outer diameter; continuously spraying, as the coiling progresses, a binder layer on a strip surface to unite the adjacent alloy strip layer to form the annular part; performing curing processing; cutting the annular element to obtain a toroidal core with a concave structure and performing the concave structure annealing to obtain the finished stator core.

The solution described in said document has, however, some inconveniences. For example, the need for constant spraying of binder during the stator coiling makes the process complex. Additionally, the annealing step of the concave structure after the cutting step of the annular element can lead to a deformation of the package associated with the thermal treatment, impairing the guarantee of the final dimensions of the package.

Document CN102761175 discloses a manufacturing method for an amorphous alloy stator core, microcrystalline and nanocrystalline, for an axial magnetic field motor with high performance using mold boxes. The manufacturing method proposed comprises the following steps: roll-shearing a coiled alloy band broadband through a roll shear along the length direction of the alloy broadband into alloy strips with the same width as the height of the finished stator iron core, rewinding the alloy strips so as to form annular alloy iron cores with preset inner diameters and outer diameters; binding the annular alloy iron cores in an annular first protective box; carrying out tooth space machining on the annular alloy iron cores and the first protective box through a cutting machining mode so as to form an alloy stator iron core with axial tooth space structures; annealing the annular alloy iron cores; and packaging the annealed annular alloy iron cores into a second protective box corresponding to the axial tooth space structures of the annular alloy iron cores, followed by binding and fixing, thus obtaining the finished stator iron cores.

The solution of document CN102761175 presents the same inconvenience described above relative to the cutting process prior to the thermal treatment of the amorphous, microcrystalline and nanocrystalline material. Additionally, the process proposed in the document requires the use of two protective boxes, whereby one of said boxes must be manufactured from a material capable of withstanding a temperature of 380°C or higher. Said requirement increases the complexity of the process and elevates the manufacturing cost.

Thus, there remains in the state of the art the need for a stator core of nanocrystalline material, which manufacturing process solves or at least reduces the inconveniences found in the solution of the state of the art.

### OBJECTIVES OF THE INVENTION

It is one of the purposes of the present invention to provide stator core of nanocrystalline material which allows a simplified manufacturing process while ensuring the final dimensions of the stator package.

It is another of the purposes of the present invention to provide a stator core of nanocrystalline material which allows groove machining after the thermal treatment of the amorphous material.

It is another purpose of the present invention to provide a stator core of nanocrystalline material which encapsulation is able to increase the mechanical resistance in the tooth regions of the stator and increase the thermal exchange capacity of the motor.

It is another purpose of the present invention to provide a manufacturing process for a stator core of nanocrystalline material which ensures the final dimensions of the stator package.

It is another purpose of the present invention to provide a manufacturing process for a stator core of nanocrystalline material wherein the groove machining of the stator core is performed after the thermal treatment of the amorphous core.

### SUMMARY OF THE INVENTION

The present invention is related to a stator core of nanocrystalline material for an axial flux electric machine, which comprises an encapsulated and machined nanocrystalline material for forming the stator teeth. In the solution of the present invention, the encapsulation comprises at least two distinct encapsulation materials deposited over the nanocrystalline material.

Preferably, at least one of the distinct encapsulation materials is a material able to increase mechanical rigidity of the stator core and at least another of the distinct encapsulation materials is a material able to increase the thermal exchange capacity of the electric machine.

In a preferred embodiment of the invention, the material able to increase the mechanical rigidity of the stator core is epoxy structural resin constituted by quartz or silica filler with a percentage of 10% to 50% by mass, more preferably 40% by mass, and the encapsulated stator core has, after machining thereof, about 10% to 90% by mass of epoxy structural resin encapsulation material, preferably about 20% to 50%, even more specifically 25% by mass. "Encapsulation mass of material" as used herein means the total mass of the encapsulation material considering all the encapsulation materials used.

In a preferred embodiment of the invention, the material able to increase the thermal exchange capacity of the electric machine is an epoxy resin constituted by alumina and silica filler, with a percentage of 30% to 80% by mass, preferably 70% by mass, and which presents a minimum thermal conductivity of 0.5W/m.K, and preferably higher than 1 W/m.K. And the encapsulated stator core has, after the machining thereof, about 90% to 10% by mass of the encapsulation material of the second encapsulation material, preferably about 80% to 50%, more preferably 75% by mass.

The present invention further contemplates a process for manufacturing a stator core of nanocrystalline material for an axial flux electric machine, which comprises the steps of:
(a) thermally treating an amorphous material to transform it into a nanocrystalline material;
(b) providing an encapsulation mold and depositing a first encapsulation material in a bottom of the encapsulation mold;
(c) assembling the thermally treated nanocrystalline material in the encapsulation mold;
(d) depositing in the encapsulation mold a second encapsulation material, forming a raw stator core; and
(e) machining the encapsulated raw stator core for forming a plurality of grooves and teeth in the raw stator core.

Preferably, the first encapsulation material comprises a material able to increase the mechanical rigidity of the stator core and the second encapsulation material comprises a material able to increase the thermal exchange capacity of the electric machine.

In one embodiment of the invention, the first encapsulation material comprises epoxy structural resin constituted by a quartz or silica filler with a percentage of 10% to 50% by mass and the second encapsulation material comprises epoxy resin constituted by silica and alumina filler, with a percentage of 30% to 80% by mass, with minimum thermal conductivity of 0.5W/m.K.

The process according to the present invention can further comprise, after step (c) and before step (d), a step of thermally curing the first encapsulation material and the thermally treated nanocrystalline material assembled on the encapsulation mold at a temperature of about 150°C for about 90 minutes.

In one embodiment, the process comprises, after step (d) and before step (e): a vacuum process for eliminating air from the encapsulated raw stator core and from the encapsulation mold; and a thermal cure step of the encapsulated raw stator core at a temperature of about 150°C for about 16 hours.

### BRIEF DESCRIPTION OF THE DRAWINGS

The present invention will now be described in greater detail, with references to the accompanying drawings, wherein:
Figure 1 - is a perspective view of a stator core of nanocrystalline material encapsulated and machined according to an embodiment of the present invention;
Figure 2 - is a perspective view of a stator core of nanocrystalline material encapsulated and machined according to an embodiment of the present invention, wherein the encapsulated material is shown without machining;
Figure 3a - is an upper view of the mold of figure 2, showing an A-A cut line;
Figure 3b - is a cross-sectional view taken from the A-A cut line;
Figure 4 - is a perspective view of the encapsulation mold for a stator core of nanocrystalline material according to an embodiment of the present invention, wherein the nanocrystalline material is shown with the first encapsulation material at the bottom of the mold;
Figure 5a - is an upper view of the mold of figure 4, showing a B-B cut line; and
Figure 5b - is a cross-sectional view taken from the B-B cut line.

### DETAILED DESCRIPTION OF THE INVENTION

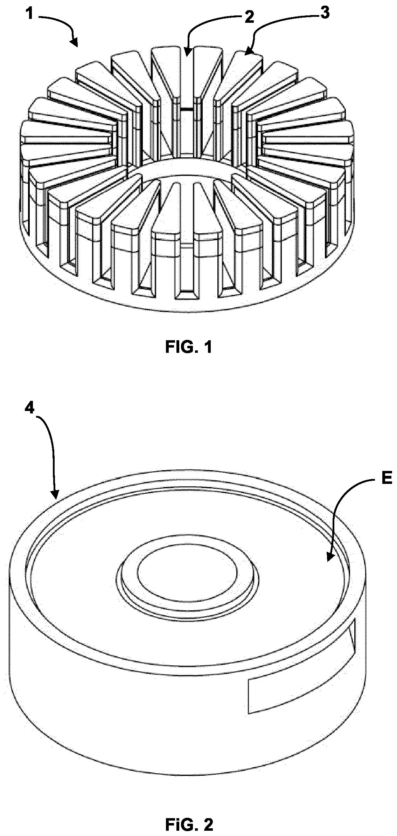

Figure 1 shows a laminated stator core 1, manufactured in a nanocrystalline material, for an axial flux motor, according to an embodiment of the present invention. As is fully known by those skilled in the art, the stator core 1 comprises grooves 2 for winding the coils of conductive material. Said grooves, which form the teeth 3 of the core 1, are usually formed by machining.

The core of machined stator 1 is manufactured from a nanocrystalline alloy material being a soft magnetic alloy which is usually made available in the form of longitudinally continuous ribbons with a certain width. In the solution of the present invention, the stator core of nanocrystalline alloy was manufactured using a nominal chemical composition of nanocrystalline alloy ribbon Fe₈₄Cu₁Nb_{5.5}Si_{8.2}B_{1.3} having a thickness of 20 ± 1 µm and a width of 40 mm, having a smooth surface. Naturally, a person skilled in the art would understand that the present invention can be adapted to use different chemical compositions of nanocrystalline alloy.

Although the present invention is described with reference to an electric motor, it must be understood that it could be equally applied to stators of other axial flux electric machines, such as, for example, axial flux generators.

In the solution of the present invention, the stator core is encapsulated with two distinct materials, with different thermal and mechanical properties.

The first encapsulating material is a material able to increase the mechanical resistance in the region of the stator's teeth. In a preferred embodiment of the invention, said material is an epoxy structural resin constituted by quartz or silica filler with a percentage of 10% to 50% by mass, preferably 40% by mass. The epoxy structural resin enables the machining process.

The second encapsulating material is a material able to increase the thermal exchange capacity of the electric machine. In a preferred embodiment of the invention, said material is an epoxy resin constituted by an alumina and silica filler with a percentage of 30% to 80% by mass, preferably 70% by mass, with a minimum thermal conductivity of 0.5 W/m.K and preferably higher than 1 W/m.K. Thus, this second material increases the thermal dissipation of the heat generated by winding outside the machine, which epoxy resin loads offer the thermal capacity and mechanical resistance to the machining process.

The forming of the nanocrystalline material core occurs by thermal treatment of an amorphous material. In the solution of the present invention, the thermal treatment process comprises the following steps: 1) placing the core of the amorphous alloy stator in a furnace, inserting and filling the furnace with nitrogen (N₂), heating to 480°C at a heating rate of 8°C/min and preserving the heat at the temperature for 30 minutes; 2) next, heating to 575°C at a heating rate of 2°C/min and preserving the heat at the temperature for 60 minutes; 3) and, next, initiating the rapid cooling device to cool the furnace body, cooling to 180°C at a velocity of 20°C/min and removing the stator core of nanocrystalline alloy. During the thermal treatment there may or not be applied a magnetic flux to the nanocrystalline alloy core for increasing the magnetic permeability of the nanocrystalline material.

In the present invention, said treatment for transforming the amorphous material into nanocrystalline is performed before the encapsulation process.

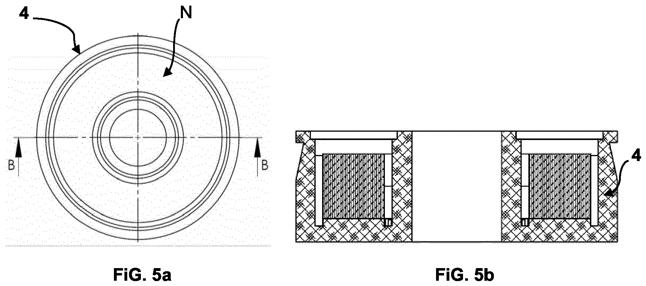

Thus, in the present invention, the amorphous material which will form the core passes by thermal treatment for the transformation thereof into nanocrystalline material before the insertion thereof in the encapsulation mold 4 shown in figures 2 to 5b. In an embodiment of the present invention, the mold 4 is manufactured in a thermoplastic material, such as, for example, polybutylene terephthalate.

For the assembly of the core in the encapsulation mold 4, the bottom of the mold is initially filled with the material able to increase the mechanical resistance in the region of the stator's teeth. Said material, which preferably comprises epoxy resin with structural properties, with a quartz or silica filler with a percentage of 10% to 50% by mass, preferably 40% by mass, increases the mechanical rigidity of the set for allowing future machining on the nanocrystalline material.

Next, the thermally treated core of nanocrystalline material is placed in the encapsulation mold and, then, the epoxy structural resin is thermally cured at a temperature in the range of 150°C for 90 minutes.

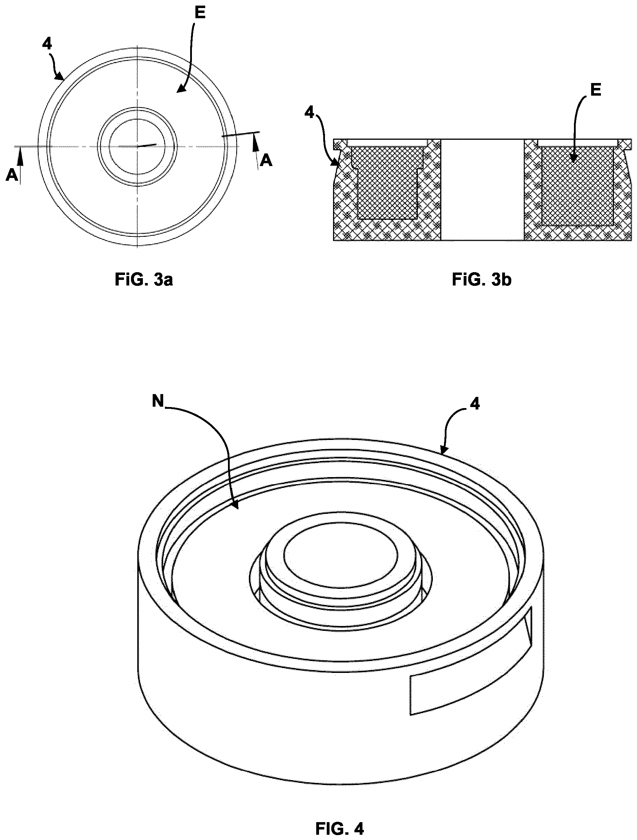

Figures 4 to 5b show the encapsulation mold 4 with the cured epoxy structural resin (first encapsulating material) together with the core of nanocrystalline material N before performing the second encapsulation.

After the cure process of the epoxy structural resin in the encapsulation mold together with the stator core of nanocrystalline material, there is performed the encapsulation process of the stator core 1 with a material able to increase the thermal exchange capacity of the electric machine (second encapsulating material).

Said material, which preferably is a thermal property epoxy resin, constituted by an alumina and silica filler, with a percentage of 30% to 80% by mass, preferably 70% by mass, is inserted in the encapsulation mold.

Next, there is carried out a vacuum process, reaching about 0.5 mbar for about approximately 30 minutes to eliminate all the air of the epoxy resin and of the encapsulation mold. Finally, the epoxy resin is thermally cured at a temperature in the range of 150°C maintained for about 16 hours. Thus, the distinct encapsulating materials are deposited over the previously thermally treated nanocrystalline material.

Figures 2 to 3b show the encapsulation mold 4 with the at least two distinct encapsulation materials E deposited before the machining of the grooves 2.

Thus, after the encapsulation process of the stator core 1 with the at least two distinct encapsulation materials, the machining of the grooves 2 can be performed. As the machining is carried out after the thermal treatment of the core, the dimensions reached do not run the risk of suffering variations, thus being ensured the final dimensions of the stator package.

The machining of the grooves is carried out without the encapsulated core being demolded.

In an embodiment of the present invention, the core of encapsulated and machined stator 1 presents preferably about 10% to 90% by mass, more preferably 20% to 50% by mass, of encapsulating material of the first encapsulating material and about 90% to 10% by mass, more preferably 80% to 50% by mass, of the encapsulation material of the second encapsulating material. Thus, during the first encapsulated material is deposited in the mold completing from 10% to 90% by mass of the encapsulating material, and the second encapsulated material is deposited in the mold completing from 90% to 10% by mass of the encapsulating material.

In the preferred embodiment, the encapsulated and machined stator core 1 presents, considering the total mass of encapsulating material, about 25% by mass of the first encapsulating material and about 75% by mass of the second encapsulating material.

Considering the total mass of the stator, which includes the mass of encapsulating materials and of the nanocrystalline magnetic core, the material able to increase the mechanical rigidity of the stator core has, after machining thereof, about 1% to about 10% relative to the total mass, more specifically 3% by mass, and the material able to increase the thermal exchange capacity of the electric machine has, after machining thereof, about 5% to 15% relative to the total mass, more specifically 11% by mass.

Since the thermal treatment is performed before the encapsulation process, it is not necessary for the encapsulation mold 4 to be manufactured from a material that is resistant to the high temperatures reached during the thermal treatment.

In fact, the use of the encapsulating material allows the treated core of nanocrystalline material to withstand the tensions exerted over the material during the machining process.

Additionally, by using two distinct encapsulation materials, the present invention achieves an encapsulation material that has adequate mechanical resistance to withstand the machining process of the core while it has a thermal conductivity that is sufficiently high to not affect the performance of the motor.

Having described preferred sample embodiments of the present invention, it must be understood that the scope of the present invention covers other possible variations of the inventive concept described, being limited solely by the content of the accompanying claims, potential equivalents included therein.

## Claims

1. Stator core of nanocrystalline material (1) for an axial flux electric machine, which comprises an encapsulated and machined nanocrystalline material for forming the stator's teeth (3), **characterized by** the fact that the encapsulation comprises at least two distinct encapsulation materials deposited over the nanocrystalline material.

2. Stator core (1), according to claim 1, **characterized by** the fact that at least one of the distinct encapsulation materials is a material able to increase the mechanical rigidity of the stator core.

3. Stator core (1), according to claim 2, **characterized by** the fact that the material able to increase the mechanical rigidity of the stator core is an epoxy structural resin constituted by a quartz or silica filler with a percentage of 10% to 50% by mass.

4. Stator core (1), according to claim 3, **characterized by** the fact that the encapsulated stator core has, after machining thereof, about 10% to 90% by mass of epoxy structural resin encapsulation material.

5. Stator core (1), according to any of claims 1 to 4, **characterized by** the fact that at least one of the distinct encapsulation materials is a material able to increase the thermal exchange capacity of the electric machine.

6. Stator core (1), according to claim 5, **characterized by** the fact that the material able to increase the thermal exchange capacity of the electric machine is a thermal property epoxy resin constituted by an alumina and silica filler, with a percentage from 30% to 80% by mass, with minimum thermal conductivity of 0.5W/m.K.

7. Stator core (1), according to claim 6, **characterized by** the fact that the encapsulated stator core has, after machining thereof, about 90% to 10% by mass of thermal property epoxy resin encapsulation material.

8. Process for manufacturing a stator core of nanocrystalline material for an axial flux electric machine, **characterized by** the fact that it comprises the steps of:
(a) thermally treating an amorphous material to transform it into a nanocrystalline material;
(b) providing an encapsulation mold (4) and depositing a first encapsulation material in a bottom of an encapsulation mold, the first encapsulation material comprising a material able to increase the mechanical rigidity of the stator core;
(c) assembling the thermally treated nanocrystalline material in the encapsulation mold;
(d) depositing in the encapsulation mold (4) a second encapsulation material, forming a raw stator core, wherein the second encapsulation material comprises a material able to increase the thermal exchange capacity of the electric machine, and
(e)machining the encapsulated raw stator core for forming a plurality of grooves (2) and teeth (3) on the raw stator core.

9. Process, according to claim 8, **characterized by** the fact that the first encapsulation material comprises epoxy structural resin constituted by a quartz or silica filler with a percentage of 10% to 50% by mass and the second encapsulation material comprises thermal property epoxy resin constituted by an alumina and silica filler, with a percentage from 40% to 80% by mass, with minimum thermal conductivity of 0.5W/m.K.

10. Process, according to claim 9, **characterized by** the fact that the encapsulated stator core has, after machining thereof, about 10% to 90% by mass of epoxy structural resin encapsulation material and about 90% to 10% by mass of thermal property epoxy resin encapsulation material.

11. Process, according to any of claims 8 to 10, **characterized by** the fact that the encapsulation mold (4) is manufactured in thermoplastic material being a polybutylene terephthalate.

12. Process, according to any of claims 8 to 11, **characterized by** the fact that it comprises, after step (c) and before step (d), a step of thermally curing the first encapsulation material and the thermally treated nanocrystalline material assembled in the encapsulation mold at a temperature of about 150°C for about 90 minutes.

13. Process, according to any of claims 8 to 12, **characterized by** the fact that it comprises, after step (d) and before step (e):
a vacuum process for eliminating air of the encapsulated raw stator core and of the encapsulation mold; and
a thermal cure step of the encapsulated raw stator core at a temperature of about 150°C for about 16 hours.
